# EUROPÄISCHE PATENTSCHRIFT

(11) **EP 0 743 100 B1**
(45) Veröffentlichungstag und Bekanntmachung des Hinweises auf die Patenterteilung: **06.11.2002**
(21) Anmeldenummer: 96107635.3
(22) Anmeldetag: 14.05.1996
(51) Int. Cl.: B05B 15/12

(54) **Auslaufkanal für einen Nassabscheider**
Exit channel for wet precipitator
Canal d'évacuation pour un précipitateur humide

(30) Priorität: 19.05.1995 DE 19518172; 30.03.1996 DE 19612813
(43) Veröffentlichungstag der Anmeldung: 20.11.1996
(73) Patentinhaber: Wurster, Gerd, D-70191 Stuttgart (DE)
(72) Erfinder: Wurster, Gerd, D-70191 Stuttgart (DE)
(74) Vertreter: Gahlert, Stefan, Dr.-Ing.

(56) Entgegenhaltungen:
- WO-A-91/14509
- US-A- 2 906 511
- US-A- 4 515 073
- US-A- 4 608 064
- US-A- 4 952 221

## Beschreibung

Die Erfindung betrifft einen Naßabscheider für eine Spritzkabine oder einen Spritzstand, mit zumindest teilweise geneigten Zuströmflächen, die zu einem Bodenauslauf hin konvergieren und in einen gegenüber der Vertikalen geneigten, gekrümmten Auslaufkanal münden, der in eine Expansionskammer mündet, wobei mindestens eine der Zuströmflächen über eine Krümmung in den Auslaufkanal übergeht, die von einer entgegengesetzt gerichteten Krümmung des Auslaufkanals gefolgt ist.

Ein derartiger Naßabscheider ist aus der US-A-2 906 511 bekannt.

Eine weitere aus der DE-B-3 317 230 bekannte Anordnung umfaßt eine Spritzkabine mit einem Naßabscheider mit einem Bodenauslauf mit in Strömungsrichtung konvergierenden Auslaufseiten, wobei dem Bodenauslauf Waschflüssigkeit von seitlichen Reservoiren oder über geneigte Zuströmflächen zugeführt ist. Der Bodenauslauf weist einen Hals auf, in dem sich die einfließende Luft- und Wasserströme vermischen und an den sich eine Dispergierkammer anschließt, die in einem zweiten Auslauf ausmündet, der wie der erste Auslauf als Venturi ausgeführt ist, mit bedeutend geringerer lichter Weite als dieser. Der Bodenauslauf hat geschwindigkeitssteigernde und vorabscheidende Funktionen, während der zweite Auslauf dem passierenden Mischungsstrom eine noch größere Geschwindigkeit verleiht, um diesen erneut und intensiver abzuscheiden. Der Bodenauslauf weist in Strömungsrichtung eine Führungsfläche auf, die im wesentlichen eben ist und eine Fortsetzung einer geraden Auslaufseite des Bodenauslaufes bildet, nach Abwinklung zu einem weniger steilen Verlauf zwischen 5° und 45° zur Horizontalen, wobei die Führungsfläche den Hals auf der unteren Seite begrenzt.

Bei dem bekannten Naßabscheider soll eine effektive Abscheidung durch eine zweifache Venturi-Wirkung erreicht werden, da der erste Ablauf als konvergierende Venturi-Düse ausgebildet ist, durch die der mit Gas gemischte Flüssigkeitsstrom beschleunigt wird und somit eine Vorabscheidung bewirkt wird. Durch den zweiten Auslauf, der gleichfalls als Venturi ausgebildet ist, soll eine starke Beschleunigung und Vernebelung des Flüssigkeit-/Gasgemisches erreicht werden. Eine derartige Anordnung ist für herkömmliche Lacke grundsätzlich vorteilhaft, ist jedoch für wasserlösliche Lacke, sogenannten Wasserlack, nur dann verwendbar, wenn Koagulierungsmittel zugesetzt wird, da hierbei eine außerordentlich starke Schaumbildung auftritt, die schon nach kurzer Betriebszeit ohne den Zusatz von Koagulierungsmittel eine Abschaltung des Flüssigkeitsstroms infolge zu starker Schaumbildung und damit eine Unterbrechung des Spritzbetriebes erforderlich macht.

Durch den Zusatz von Koagulierungsmittel wird jedoch ein Recycling des Oversprays, das in die Waschflüssigkeit gelangt, unmöglich gemacht bzw. erheblich erschwert.

Die Aufgabe der Erfindung besteht demnach darin, einen Naßabscheider für eine Spritzkabine oder einen Spritzstand zu schaffen, der ohne einen Zusatz von Koagulierungsmittel auch für Wasserlacke verwendbar ist, ohne daß Probleme wegen zu starker Schaumbildung auftreten.

Diese Aufgabe wird erfindungsgemäß dadurch gelöst, daß bei einem Naßabscheider gemäß der eingangs genannten Art der Auslaufkanal in eine geneigte Bodenfläche des Expansionsraums übergeht, dessen Neigung gegenüber der Horizontalen mindestens 10° beträgt.

Durch die beiden entgegengesetzt gerichteten Krümmungen des Auslaufkanals, die so insgesamt etwa die Form eines S bilden, wird eine starke Beruhigung und Verzögerung des in den Bodenauslauf abfließenden Flüssigkeits-/Gasgemisches hervorgerufen wird. Die Strömungsgeschwindigkeit wird deutlich herabgesetzt, und in Verbindung mit sanften Krümmungen an den Übergängen wird die Schaumbildung bei Wasserlack stark reduziert. Eine wirkungsvolle Abscheidung wird dabei durch die Doppelbeflutung des Auslaufkanals von beiden Zuströmflächen her erreicht. Auf einen Zusatz von Koagulierungsmittel kann hierbei vollständig verzichtet werden, wodurch ein Recycling der Waschflüssigkeit, d.h. des Spritzkabinenumlaufwassers, erheblich erleichtert wird. Das Recycling kann dabei durch Aufkonzentrierung mit Hilfe von Membranfiltration, z.B. durch Ultrafiltration, Mikrofiltration oder Umkehrosmose, durchgeführt werden.

Dadurch, daß der Auslaufkanal sanft in eine geneigte Bodenfläche des Expansionsraums übergeht, wird eine weitere Beruhigung des Flüssigkeitsstroms erreicht und dadurch die Schaumbildung reduziert. Ferner wird infolge des sanften Übergangs von der Auslaufkrümmung zur Bodenfläche des Expansionsraums ein vertikales Auftreffen des Flüssigkeitsstroms von der oberen Begrenzung des Auslaufkanals auf die darunterliegende Fläche vermieden und stattdessen eine weitgehend sanfte, wirbelarme Strömung erreicht.

Durch eine geringe Neigung der Bodenfläche gegenüber der Horizontalen wird eine stärkere Verzögerung des Flüssigkeitsstroms erreicht. Wird eine noch geringere Neigung gewählt, so führt dies zu stärkerer Ablagerung von Lackresten und anderen Partikeln auf der Bodenfläche, was sich nachteilig auswirkt.

In bevorzugter Weiterbildung der Erfindung beträgt die Neigung der Bodenfläche zwischen etwa 10° und 30°, insbesondere zwischen etwa 15° und 20°.

Es hat sich gezeigt, daß mit einer derartigen Neigung der Bodenfläche ein optimaler Kompromiß zwischen einer möglichst weitgehenden Beruhigung des Flüssigkeitsstroms und damit einer Reduzierung der Schaumbildung und einer stärkeren Verunreinigung durch Absetzen von Partikeln gewährleistet ist.

In weiterer Ausgestaltung der Erfindung ist die entgegengesetzt gerichtete Krümmung des Auslaufkanals stärker als 90° gekrümmt.

Mit einer derartigen Ausgestaltung des Auslaufkanals wird eine vollständige Richtungsumkehr des ausströmenden Flüssigkeits-/Gasgemisches erreicht, wodurch eine starke Reduzierung der Ausströmgeschwindigkeit erzielt wird, wobei gleichzeitig eine stärkere Wirbelbildung verhindert wird und eine weitgehend wirbelarme Strömung durch die sanften Übergänge an den Einlaufseiten des Auslaufkanals erreicht wird.

Gemäß einer weiteren Ausgestaltung der Erfindung schließt sich an die entgegengesetzt gerichtete Krümmung des Auslaufkanals eine zweite entgegengesetzt gerichtete Krümmung an, die in die Bodenfläche des Expansionsraums übergeht.

Diese Maßnahme hat den Vorteil, daß durch die zusätzliche, entgegengesetzt gerichtete Krümmung eine weitere Beruhigung des Flüssigkeits-/Gasgemisches und damit eine weitere Reduzierung der Schaumbildung erreicht wird.

In weiterer Ausgestaltung der Erfindung ist die obere Begrenzungsfläche des Auslaufkanals in Richtung zur darüberliegenden Zuströmfläche, vorzugsweise bis hin zur darüberliegenden Zuströmfläche verlängert.

Durch diese Ausgestaltung wird eine Abrißkante an der oberen Begrenzungsfläche des Auslaufkanals vermieden und insgesamt die Diffusorwirkung am Ende des Auslaufkanals verbessert, ohne daß Verwirbelungen in stärkerem Maße auftreten. Auch diese Maßnahme trägt zu einer deutlichen Reduzierung der Schaumbildung bei. Durch die Verlängerung der oberen Begrenzungsfläche wird die Diffusorwirkung verbessert und es ermöglicht, auf den Einbau von Abschlagblechen, Tropfenabscheidern oder Filtern im Expansionsraum zu verzichten, da weniger Tropfen mitgerissen werden. Durch einen dichtenden Anschluß an die darüber angeordnete Zuströmfläche wird eine Ablagerung von Flüssigkeit und Lackresten vermieden, was eine Reinigung sowie einen Farbwechsel erleichtert.

In weiterer Ausgestaltung der Erfindung geht die Bodenfläche des Expansionsraums über eine Krümmung von weniger als 90° in eine Auslaufrinne über.

Durch einen derartigen sanften Übergang in eine Auslaufrinne wird eine weitere Beruhigung des Flüssigkeits-/Gasgemisches erreicht und ein sanftes Ausfließen mit geringer Wirbelbildung gefördert.

In zusätzlicher Weiterbildung dieser Ausführung weist die Auslaufrinne ein quer zur Strömungsrichtung der Flüssigkeit auf der Bodenfläche gerichtetes Gefälle auf.

Mit einer derartigen Ausführung wird einerseits ein Absetzen von Partikeln in der Auslaufrinne weitgehend vermieden und andererseits ein ruhiges Auslaufen der Flüssigkeit in eine Abflußleitung ermöglicht, von der aus die Flüssigkeit in einen Auffangbehälter eingeleitet werden kann.

In bevorzugter Ausgestaltung der Erfindung sind die Neigungen der Zuströmflächen, deren Übergänge zum Auslaufkanal, sowie die Form des Auslaufkanals derart aufeinander abgestimmt, daß die Strömungsgeschwindigkeit im Auslaufkanal höchstens 15 m pro Sekunde, vorzugsweise zwischen etwa 6 und 10 m pro Sekunde beträgt.

Während nach dem Stand der Technik gemäß der eingangs genannten DE 33 17 230 C2 Strömungsgeschwindigkeiten in der Größenordnung von 20 m pro Sekunde und mehr bevorzugt sind, die durch die Venturi-Wirkung der beiden Ausläufe noch vergrößert werden, wurde erfindungsgemäß erkannt, daß eine geringere Strömungsgeschwindigkeit notwendig ist, um eine zu starke Schaumbildung bei Wasserlack zu verhindern. Im bevorzugten Bereich zwischen etwa 6 und 10 m pro Sekunde ergibt sich ein optimaler Kompromiß zwischen einer guten Abscheidewirkung, einer gleichmäßigen Absaugung und einer Verminderung der Schaumreduzierung bei Wasserlack.

In weiterer Ausgestaltung der Erfindung sind am Ende des Auslaufkanals Spritz- oder Nebeldüsen vorgesehen, um das aus dem Auslaufkanal austretende Flüssigkeits-/Gasgemisch von oben zu besprühen.

Durch eine derartige Maßnahme wird eine weitere Reduzierung der Schaumbildung ermöglicht, da durch ein Besprühen von oben bereits gebildeter Schaum zum großen Teil beseitigt werden kann.

In weiterer Ausgestaltung der Erfindung sind innerhalb des Expansionsraums Abschlagbleche, Tropfenabscheider oder Filter vorgesehen.

Durch diese Maßnahme wird die Wirksamkeit des Naßabschneiders deutlich verbessert. Dabei ist die Verwendung von Abschlagblechen bevorzugt, da diese weitgehend unempfindlich gegen Verschmutzung sind.

Gemäß einer weiteren Ausgestaltung der Erfindung sind innerhalb des Expansionsraumes Waschdüsen zur Reinigung der Begrenzungsflächen vorgesehen.

Durch diese Maßnahme wird es ermöglicht, innerhalb des Expansionsraums aufgetretene Ablagerungen von Zeit zu Zeit zu beseitigen oder sogar während des Spritzbetriebes ein Auftreten von Ablagerungen zu verhindern. Dies kann insbesondere bei Lacken und anderen Anstrichmitteln vorteilhaft sein, die schon bei Raumtemperatur leicht zur Filmbildung und zum Antrocknen neigen.

In weiterer Ausgestaltung der Erfindung kann innerhalb des Expansionsraums eine Zugangstür vorgesehen sein.

Diese Maßnahme hat den Vorteil, daß innerhalb des Expansionsraums, der durch die schräg angeordnete Bodenfläche und durch deren Gefälle eine ausreichende Größe aufweist, auch eine manuelle Reinigung z.B. mit Hilfe eines Hochdruckreinigers erfolgen kann, sofern sich innerhalb des Expansionsraumes im Laufe des Betriebes stärkere Ablagerungen gebildet haben sollten. Daneben können durch eine solche Tür auch andere Reinigungsgeräte oder Vorrichtungen zur Reinigung des Expansionsraums eingeschleust werden.

Eine wirkungsvolle Reinigung und ein sicheres Entfernen von Ablagerungen führt zu einer weiteren Verringerung der Schaumbildung innerhalb des Expansionsraums, da glatte Oberflächen vorhanden sind und somit die Gefahr einer Wirbelbildung und auch Reibungseinflüsse reduziert werden.

In weiter bevorzugter Ausgestaltung der Erfindung sind die Zuströmflächen des Naßabscheiders mit den Wandflächen der Spritzkabine über Krümmungen verbunden, in deren Bereich Waschdüsen angeordnet sind.

Auf diese Weise wird eine sanfte, wirbelarme Überleitung der von den Wänden der Spritzkabine ablaufenden Flüssigkeit erreicht und gleichzeitig ein Absetzen in den Ecken der Spritzkabine vermieden.

Gemäß einer bevorzugten Weiterbildung der Erfindung ist wenigstens an der zumindest einen Krümmung der Zuströmfläche oder an der oberen Begrenzungsfläche des Auslaufkanals ein Vorsprung als Tropfnase vorgesehen.

Durch diese Maßnahme wird die Abscheidewirkung des Naßabscheiders erheblich verbessert, da eine Ablösung oder eine Teilablösung der Flüssigkeit von der Oberfläche erreicht wird. Ohne eine derartige Tropfnase neigt die Flüssigkeit dazu, soweit sie außer Wasser gewisse Zusätze wie etwa Amine, Butyglykol oder Lack enthält, an den gekrümmten Oberflächen anzuhaften. Die Tropfnasen bewirken eine Ablösung oder Teilablösung von der Flüssigkeit und somit eine deutliche Verbesserung der Abscheidewirkung. Dabei wird die Grundgeometrie des Naßabscheiders in keiner Weise nachteilig beeinflußt, da die Vorsprünge ausreichend klein ausgebildet sein können, etwa in der Größenordnung von 10 bis 30 mm Länge. Somit tritt keine verstärkte Schaumbildung auf. Grundsätzlich können diese Vorsprünge als einfache, nach unten weisende Bleche ausgebildet sein, die sich praktisch über die gesamte Breite des Auslaufkanals erstrecken.

Bevorzugt ist jedoch eine Ausbildung der Vorsprünge als Winkel, die dichtend an die Krümmung der Zuströmfläche oder die obere Begrenzungsfläche des Auslaufkanals angeschlossen sind. Dabei können etwa rechtwinklige oder auch spitzwinklige Winkel vorgesehen sein, deren Schenkellänge vorzugsweise zwischen etwa 10 und 20 mm liegt.

Durch eine derartige Ausführung der Vorsprünge ist einerseits eine ausreichende Wirkung zur Ablösung oder Teilablösung der Flüssigkeit von der Oberfläche sichergestellt und andererseits eine leichte Reinigung ermöglicht, da alle Oberflächen, an denen sich Lackreste absetzen können, leicht zugänglich sind.

Ein erfindungsgemäßer Naßabscheider kann sowohl vorteilhaft für eine Spritzkabine als auch für einen Spritzstand verwendet werden. Bei einer Spritzkabine handelt es sich bekanntlich um eine allseitig geschlossene Kabine, bei der eine Luftführung von oben nach unten erfolgt. Dagegen ist ein Spritzstand an einer Seite offen, von der aus das Bedienungspersonal in Richtung zur Rückwand des Spritzstandes hin arbeiten, also etwa spritzlackieren kann. Die Luftführung bei einem Spritzstand verläuft naturgemäß, anders als bei einer Spritzkabine, nicht von oben nach unten sondern von vorn nach hinten.

Soweit der erfindungsgemäße Naßabscheider bei einer Spritzkabine eingesetzt wird, sind beide Zuströmflächen zu den Seitenwänden der Spritzkabine hin geneigt und gehen unmittelbar in die befluteten Seitenwände vorzugsweise über Krümmungen über, in deren Bereich sich zusätzliche Waschdüsen befinden.

Wird dagegen ein erfindungsgemäßer Naßabscheider bei einem Spritzstand verwendet, so schließt sich der Naßabscheider unmittelbar an die beflutete Rückwand an, die dann über die zumindest eine Krümmung in den Auslaufkanal des Naßabscheiders übergeht, an die sich die erfindungsgemäße entgegengesetzt gerichtete Krümmung des Auslaufkanals anschließt. Auch bei dieser Ausführung befindet sich vorzugsweise am Übergang der befluteten Rückwand in den Auslaufkanal sowie am unteren Ende der oberen Begrenzungsfläche des Auslaufkanals ein Vorsprung als Tropfnase, um eine Ablösung oder Teilablösung des Flüssigkeitsstroms von den gekrümmten Oberflächen zu unterstützen.

Bei einem erfindungsgemäßen Spritzstand kann die Abluft aus dem Expansionsraum des Naßabscheiders in einen Wäscher abgeführt werden, der vorzugsweise an einer Seitenwand des Spritzstandes angekoppelt ist. Auf diese Weise wird die Arbeitsfläche innerhalb des Spritzstandes nicht durch den Wäscher behindert. Bei breiteren Spritzständen kann an beiden Seitenwänden ein Wäscher vorgesehen sein.

Soweit zwei beidseitige Wäscher bei noch breiteren Spritzständen nicht mehr zur Abluftwäsche ausreichen, so sind gemäß einer bevorzugten Weiterbildung der Erfindung ein oder mehrere Wäscher im vorderen, der befluteten Rückwand gegenüberliegenden Bereich des Spritzstandes vorgesehen.

Auf diese Weise können auch sehr lange Spritzstände mit einem erfindungsgemäßen Naßabscheider ausgestattet werden, wobei eine ausreichende Abluftwäsche gewährleistet ist.

Es versteht sich, daß die vorstehend genannten und die nachstehend noch zu erläuternden Merkmale der Erfindung nicht nur in der jeweils angegebenen Kombination, sondern auch in Alleinstellung oder in anderen Kombinationen verwendbar sind, ohne den Rahmen der Erfindung zu verlassen.

Weitere Merkmale und Vorteile der Erfindung ergeben sich aus der nachfolgenden Beschreibung bevorzugter Ausführungsbeispiele unter Bezugnahme auf die Zeichnung. Es zeigen:
- Fig. 1: eine erste Ausführung eines erfindungsgemäßen Naßabscheiders am Beispiel einer Spritzkabine in geschnittener, schematischer Darstellung;
- Fig. 2: einen schematischen Querschnitt durch einen erfindungsgemäßen Naßabscheider in vergrößerter Darstellung, der leicht gegenüber der Ausführung gemäß Fig. 1 abgewandelt wurde;
- Fig. 3: eine weitere Abwandlung des erfindungsgemäßen Naßabscheiders für eine Spritzkabine;
- Fig. 4: eine weitere Ausführung eines erfindungsgemäßen Naßabscheiders am Beispiel eines Spritzstandes in geschnittener, schematischer Darstellung;
- Fig. 5: eine Aufsicht des Spritzstandes gemäß Fig. 4 in verkleinerter, schematischer Darstellung; und
- Fig. 6: eine Abwandlung des Spritzstandes gemäß Fig. 5.

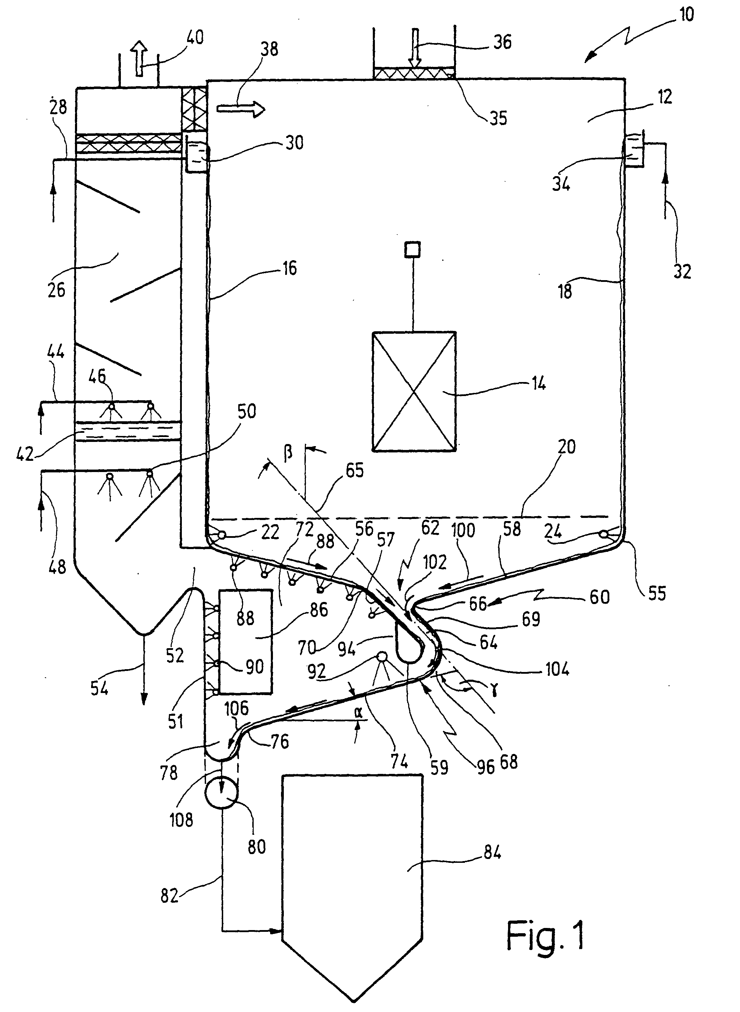

In Fig. 1 ist eine erfindungsgemäße Spritzkabine insgesamt mit der Ziffer 10 bezeichnet.

Die Spritzkabine 10 umfaßt einen Spritzraum 12, an dessen Boden ein Naßabscheider zur Abscheidung von Flüssigkeiten und Gasen vorgesehen ist, der insgesamt mit der Ziffer 60 bezeichnet ist und der nachfolgend noch näher beschrieben wird.

Dem Spritzraum 12 wird von oben über ein Filter 35 Zuluft zugeführt, wie schematisch mit dem Pfeil 36 angedeutet ist. Die Spritzkabinenluft wird über den Naßabscheider 60 zusammen mit dem Flüssigkeitsstrom nach unten abgeführt, gelangt durch einen Expansionsraum 72 und tritt am oberen Ende des Expansionsraums 72 über einen Abluftkanal 52 in einen Wäscher 26 über, in dem die Abluft nachgereinigt und gefiltert wird und dann zum Teil dem Spritzraum 12 wieder seitlich von oben zugeführt wird, wie durch den Pfeil 38 angedeutet ist und zum anderen Teil mit Hilfe entsprechender Ventilatorunterstützung an die Umgebungsluft abgegeben wird, wie durch den Pfeil 40 angedeutet ist.

Im dargestellten Beispiel sind die Wände der Spritzkabine 10 als Rieselflächen 16, 18 ausgebildet, die aus kleinen Reservoiren 30, 34, die über Leitungen 28, 32 mit Spritzkabinenumlaufwasser versorgt werden, berieselt werden.

Bei der dargestellten Spritzkabine handelt es sich um eine größere Anlage, bei der eine sorgfältige Nachreinigung der im Naßabscheider 60 vorgereinigten Abluft der Spritzkabine im Wäscher 26 erfolgt.

Der dargestellte Wäscher 26 ist als Düsenwäscher ausgeführt, der eine Mehrzahl von Waschdüsen 50 aufweist, die über eine Leitung 48 mit Spülflüssigkeit versorgt werden. Ferner ist eine Mehrzahl von Filtern vorgesehen, die beispielhaft durch die Ziffer 42 angedeutet sind und die zusätzlich durch Spritzdüsen 46 gereinigt werden können, denen über eine Leitung 44 Waschflüssigkeit oder Permeat aus einer Ultrafiltration zugeführt wird.

Die im Wäscher 26 anfallende Waschflüssigkeit gelangt über einen Ablauf 54 zurück in einen Spülkreislauf.

Es versteht sich, daß insbesondere bei kleineren Anlagen auf den zusätzlichen Wäscher 26 verzichtet werden kann, und daß die im Naßabscheider gereinigte Abluft über einen Abluftkanal unmittelbar an die Umgebung abgegeben werden kann.

Im Spritzraum 12 der Spritzkabine 10 können Werkstücke, die schematisch durch die Ziffer 14 angedeutet sind, automatisch oder manuell spritzlackiert werden. Soll die Spritzkabine 10 ganz oder teilweise manuell benutzt werden, so ist ein Bodenrost 20 am unteren Ende oberhalb des Naßabscheiders 60 vorgesehen, auf dem das Bedienungspersonal stehen kann. Bei Automatikkabinen wird vorzugsweise auf einen derartigen Bodenrost vollständig verzichtet.

Die Wände des Spritzraumes 12 gehen am unteren Ende über Krümmungen 55 in ebene Zuströmflächen 56, 58 über, die zu einem etwa in der Mitte des Spritzraumes 12 angeordneten Bodenauslauf 62 hin geneigt sind.

Die erfindungsgemäße Spritzkabine 10 kann grundsätzlich zur Spritzlackierung mit beliebigen Anstrichstoffen verwendet werden, also z.B. für herkömmliche, lösungsmittelhaltige Lacke, für wasserlösliche oder nicht wasserlösliche Einbrennlacke, für lösungsmittelhaltige oder wasserlösliche Füller oder auch für zahlreiche andere Anstrichstoffe. Besondere Vorteile weist die erfindungsgemäße Spritzkabine 10 jedoch insbesondere bei der Verwendung von wasserlöslichem Lack, sogenanntem Wasserlack, auf, da Wasserlack im Spritzkabinenumlaufwasser bei herkömmlichen Spritzkabinen zu einer außerordentlich starken Schaumbildung führt, die eine erhebliche Problematik beim Betrieb der Spritzkabine darstellt. Der erfindungsgemäße Naßabscheider 60 ist derart ausgebildet, daß eine Schaumbildung auch bei Wasserlack weitgehend vermieden wird, so daß die erfindungsgemäße Spritzkabine 10 auch bei großen Mengen an umlaufender Waschflüssigkeit problemlos ohne Schaumbildung verwendet werden kann. Dadurch kann auf den Zusatz von Koagulierungsmittel verzichtet werden, wodurch ein Recycling des Oversprays, das in das Spritzkabinenumlaufwasser gelangt, mit Hilfe von Membranfiltration ermöglicht wird.

Gemäß Fig. 1 sind die beiden Zuströmflächen 56, 58 zur Mitte, in Richtung zum Bodenauslauf 62 hin geneigt und gehen über Krümmungen 66, 70 in einen Auslaufkanal 64 über, der in die Expansionskammer 72 mündet. Die Neigung der beiden Zuströmflächen beträgt etwa 15° gegenüber der Horizontalen. Die in Fig. 1 linke Zuströmfläche 56 geht über die Krümmung 70, die etwa einen Winkel von 30° überdeckt, in einen unteren Abschnitt 57 über, der den Beginn des Auslaufkanals 64 bildet. Die gegenüberliegende Zuströmfläche 58 auf der rechten Seite geht über eine sanfte Krümmung 66, die einen Winkel von etwa 120° überdeckt, in die obere Fläche des Auslaufkanals 64 über. Somit schließt der Auslaufkanal 64 an seinem oberen Ende mit der Zuströmfläche 58 einen Winkel von etwa 60° ein.

Die Mittelachse 65 des Auslaufkanals 64 an der Einlaufseite ist gegenüber der Vertikalen um einen Winkel β von etwa 40° geneigt.

An die Krümmung 66 des Auslaufkanals 64 schließt sich nach einem kurzen ebenen Bereich 69 eine zweite Krümmung 68 an, die der ersten Krümmung 66, mit der die Zuströmfläche 58 in den Auslaufkanal 64 übergeht, entgegengesetzt gerichtet ist. Durch die zwei hintereinander angeordneten Krümmungen 66, 68 entsteht somit die Form eines S. Die zweite Krümmung 68 überdeckt einen Winkel γ von etwa 110° bis 120° und geht in eine ebene Bodenfläche 74 der Expansionskammer 72 über. Somit schließt die ebene Bodenfläche 74 der Expansionskammer 72 mit der Horizontalen einen Winkel α von etwa 15° bis 20°, vorzugsweise von etwa 15° ein.

Der untere Abschnitt 57 der Zuströmfläche 56, der den Einlauf des Auslaufkanals 34 bildet, ist von einer Krümmung 59 gefolgt, an die sich am Ende des Auslaufkanals 64 wiederum eine ebene obere Begrenzungsfläche 94 anschließt, die wieder bis an die Unterseite des unteren Abschnittes 57 der Zuströmfläche 56 zurückgeführt ist. Der untere Abschnitt 57, die Krümmung 59 und die obere Begrenzungsfläche 94 schließen somit einen etwa tropfenförmigen Querschnitt ein.

Der Auslaufkanal 64 besitzt in seinem oberen Abschnitt nach dem konvergierenden Bereich einen Bereich etwa gleichförmigen Querschnittes, der bis zum Ende der Krümmung 68 beibehalten wird. Der Auslaufkanal 64 weitet sich erst an seinem unteren Ende durch die Weiterführung der Krümmung 59 bis hin zur ebenen oberen Begrenzungsfläche 94 auf, so daß das Ende des Auslaufkanals 64 als Diffusor ausgebildet ist, was schematisch durch die Ziffer 96 angedeutet ist.

Oberhalb der Bodenfläche 74 ist neben der oberen Begrenzungsfläche 94 ein Rohr angeordnet, an dem eine Mehrzahl von Waschdüsen 92 vorgesehen ist, die eine Besprühung der darunterliegenden Bodenfläche 74 erlauben.

Der Expansionsraum 72 weist einen etwa dreieckförmigen Querschnitt auf, ist an seiner Oberseite durch die Zuströmfläche 56 und die obere Begrenzungsfläche 94 des Auslaufkanals 64 begrenzt und ist an seinem dem Auslaufkanal 64 gegenüberliegenden Ende durch eine vertikale Abschlußwand 51 abgeschlossen.

Sowohl vor der vertikalen Abschlußwand 51 als auch unterhalb der Zuströmfläche 56 sind Waschdüsen zur Reinigung angeordnet, die schematisch mit den Ziffern 90 bzw. 88 angedeutet sind. Der Expansionsraum 72 ist durch eine Tür 86 begehbar, um ggf. eine manuelle Reinigung der Flächen mit Hilfe eines Hochdruckreinigers oder dergleichen durchführen zu können. Auch andere Reinigungsgeräte oder Vorrichtungen können durch eine solche Tür 86 eingebracht werden.

Die Bodenfläche 74 des Expansionsraumes 72 geht über eine sanfte Krümmung 76 in eine Auslaufrinne 78 über, die in Richtung der Längserstreckung der Spritzkabine 10, d.h. also senkrecht zur Strömungsrichtung der Flüssigkeit, auf der Bodenfläche 74 mit einem Gefälle geneigt ist. Die Auslaufrinne 78 endet schließlich in einen Auslauf 80, der über eine Leitung 82 mit einem nachgeordneten Auffangbehälter 84 verbunden ist.

Wenn nun im Betrieb der Spritzkabine 10 die Wandflächen 16, 18 mit Waschflüssigkeit berieselt werden, wie in Fig. 1 schematisch durch den Flüssigkeitsfilm angedeutet ist, so wird die Waschflüssigkeit über die Krümmungen 55 und die Zuströmflächen 56, 58 in den Auslaufkanal 64 geleitet. Gleichzeitig gelangt die Kabinenluft, die den Spritzraum 12 vertikal von oben nach unten durchströmt, in den Auslaufkanal 64 und vermischt sich dort mit dem Flüssigkeitsstrom, wie durch die Pfeile 98, 100, 102 angedeutet ist. Durch die doppelte Beflutung des Auslaufkanals 64 von zwei Seiten her wird einerseits eine gute Abscheidewirkung des Naßabscheiders 60 bewirkt und andererseits eine übermäßige Schaumbildung verhindert. Ferner wird durch die spezielle Geometrie des Auslaufkanals 64 und insbesondere durch dessen Ausbildung als Diffusor 96 am Auslaufende eine Schaumbildung bei Wasserlack vermieden, ohne daß hierzu Koagulierungsmittel zugesetzt werden muß.

Sollte dennoch eine zu große Schaumbildung am Ende des Auslaufkanals 64 auftreten, so kann durch die zusätzlich in diesem Bereich angeordneten Wasch- oder Nebeldüsen 92 eine wirksame Schaumreduzierung erreicht werden. Eine weitere Beruhigung des Flüssigkeits-/Gasgemisches tritt durch die lange Bodenfläche 74 in Verbindung mit der relativ geringen Neigung von etwa 15° auf. Schließlich wird eine weitere Beruhigung des Flüssigkeitsstroms durch den sanften Übergang durch die Krümmung 76 in die Auslaufrinne 78 und durch das zusätzliche Gefälle der Auslaufrinne 78 zum Auslauf 80 hin erreicht. Das in den Bodenauslauf 62 am Beginn des Auslaufkanals 64 eintretende Flüssigkeitsgemisch-/Gasgemisch, das in Richtung der Pfeile 104 den Auslaufkanal 64 durchquert und diesen als weitgehend wirbelfreie Strömung verläßt, gelangt über die schräge Bodenfläche 74 in die Auslaufrinne 78, wie durch den Pfeil 106 angedeutet ist.

In der Krümmung 68 des Auslaufkanals 64 wird ein Aufprallen des Flüssigkeits-/Gasgemisches auf eine horizontale Fläche vermieden, sondern stattdessen eine sanfte Anlenkung des Gemisches an die schräge Bodenfläche 74 erreicht, wie durch den Pfeil 104 angedeutet ist.

Insgesamt wird durch diese Maßnahmen ohne den Zusatz von Koagulierungsmittel eine Schaumbildung auch bei Verwendung von Wasserlack in ausreichendem Umfang vermieden und gleichzeitig eine ausreichende Abscheidewirkung sichergestellt.

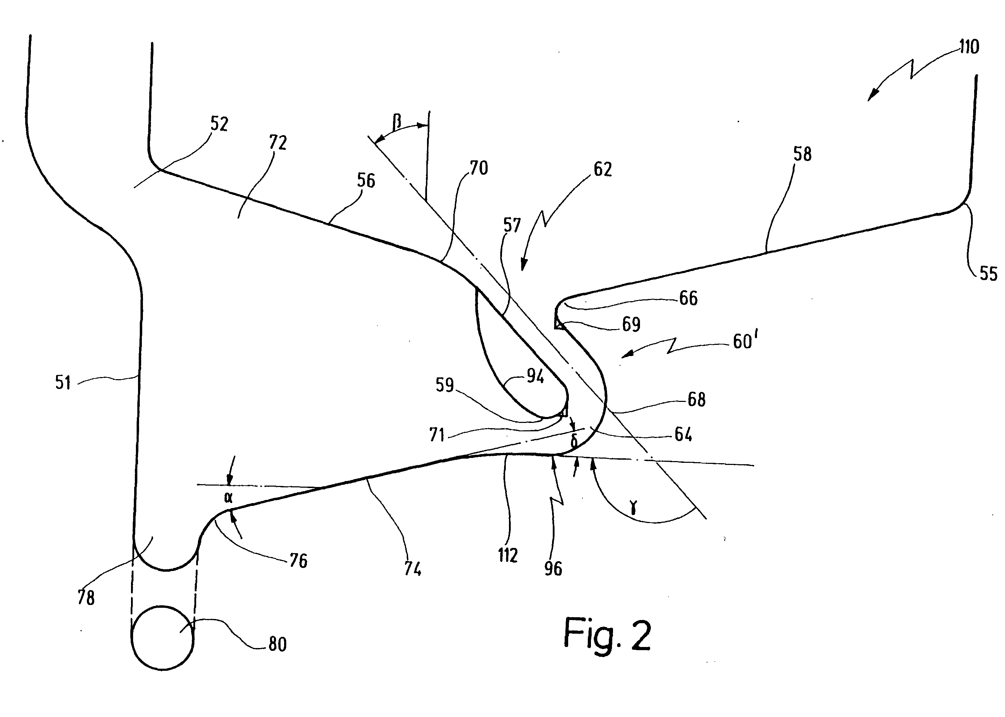

Ein Ausschnitt einer alternativen Ausführung eines erfindungsgemäßen Naßabscheiders einer Spritzkabine, die insgesamt mit der Ziffer 110 bezeichnet ist, ist in Fig. 2 vergrößert dargestellt. Der Naßabscheider 60' ist gegenüber der zuvor anhand von Fig. 1 erläuterten Ausführung leicht abgewandelt. Für entsprechende Teile werden im übrigen gleiche Bezugsziffern wie bei Fig. 1 verwendet.

Der Naßabscheider 60' unterscheidet sich gegenüber der zuvor anhand von Fig. 1 erläuterten Ausführung dadurch, daß sich an die zweite Krümmung 68 eine weitere, der zweiten Krümmung 68 entgegengesetzt gerichtete Krümmung 112 am Ende des Auslaufkanals 64 anschließt, mit der dieser sanft in die Bodenfläche 74 übergeht. Ein weiterer Unterschied zum zuvor beschriebenen Naßabscheider 60 besteht darin, daß die Krümmung 59 der oberen Begrenzungsfläche des Auslaufkanals 64 sich auch im Expansionsraum 72 bis hin an den unteren Abschnitt 57 der Zuströmfläche 56 fortsetzt, so daß durch den unteren Abschnitt 57 der Zuströmfläche 56 und durch die sich daran anschließende Krümmung 59 ein insgesamt etwa flügelförmiger Querschnitt mit Strömungslinienform gebildet wird.

Durch diese Ausführung des Auslaufkanals 64, der sich in seinem Diffusorbereich 96 beidseitig nach außen hin durch die Krümmungen 112 bzw. 94 erweitert, wird so insgesamt eine noch bessere Reduzierung der Strömungsgeschwindigkeit des Flüssigkeits/Gasgemisches im Diffusor 96 ohne Wirbelbildung ermöglicht, wodurch die Gefahr einer Schaumbildung bei Wasserlack noch weiter reduziert wird.

Der Winkel δ, um den die Krümmung 112 nach unten bis hin zur Bodenfläche 74 abgewinkelt ist, liegt vorzugsweise in einem Bereich von etwa 10° bis 30°.

Der Winkel γ, den die zweite Krümmung 68 überstreicht, ist vorzugsweise etwas größer als bei der Ausführung gemäß Fig. 1 und liegt in einem Bereich von etwa 130° bis 150°. Durch die so zunächst erfolgende stärkere Umlenkung des Flüssigkeits/Gasgemisches im Auslaufkanal 64 wird eine weitgehend wirbelarme Überführung des Flüssigkeits-/Gasgemisches in den Diffusorbereich 96 und ein weitgehend wirbelarmer Übertritt auf die Bodenfläche 74 erreicht.

Insgesamt wird so die Gefahr einer Schaumbildung nochmals reduziert.

Ein weiterer Unterschied des Naßabscheiders 60' gegenüber dem zuvor anhand von Fig. 1 beschriebenen Naßabscheider 60 besteht darin, daß an der Krümmung 66 der Zuströmfläche 58 am Beginn des Auslaufkanals 64 sowie an der Krümmung 59 am Ende des Auslaufkanals 64 jeweils ein nach unten weisender Vorsprung 69 bzw. 71 als Tropfnase ausgebildet ist. Die Vorsprünge 69, 71 sind als gleichschenklige Winkel mit 90° mit einer Schenkellänge von etwa 10 bis 20 mm ausgebildet, die unmittelbar an die Krümmungen 66 bzw. 59 dichtend angeschlossen, z.B. aufgeschweißt sind und sich im wesentlichen über die gesamte Breite des Auslaufkanals 64 erstrecken.

Diese nach unten weisenden Vorsprünge 69 bzw. 71 unterstützen eine Ablösung oder eine Teilablösung der durch den Auslaufkanal nach unten abgesaugten Flüssigkeit von den Oberflächen. Sofern die Flüssigkeit nämlich außer Wasser gewisse Zusätze wie etwa Butyglykol oder Amine enthält oder schon gewisse Lackmengen aufgenommen hat, haftet die Flüssigkeit infolge höherer Adhäsionsspannung weitgehend an den Oberflächen. Durch die Vorsprünge 69 bzw. 71 wird eine gewisse Ablösung der Flüssigkeit von den Oberflächen erreicht und damit die Abscheidewirkung verbessert. Dennoch wird die Geometrie des Naßabscheiders nicht nachteilig beeinflußt, so daß keine verstärkte Schaumbildung auftritt.

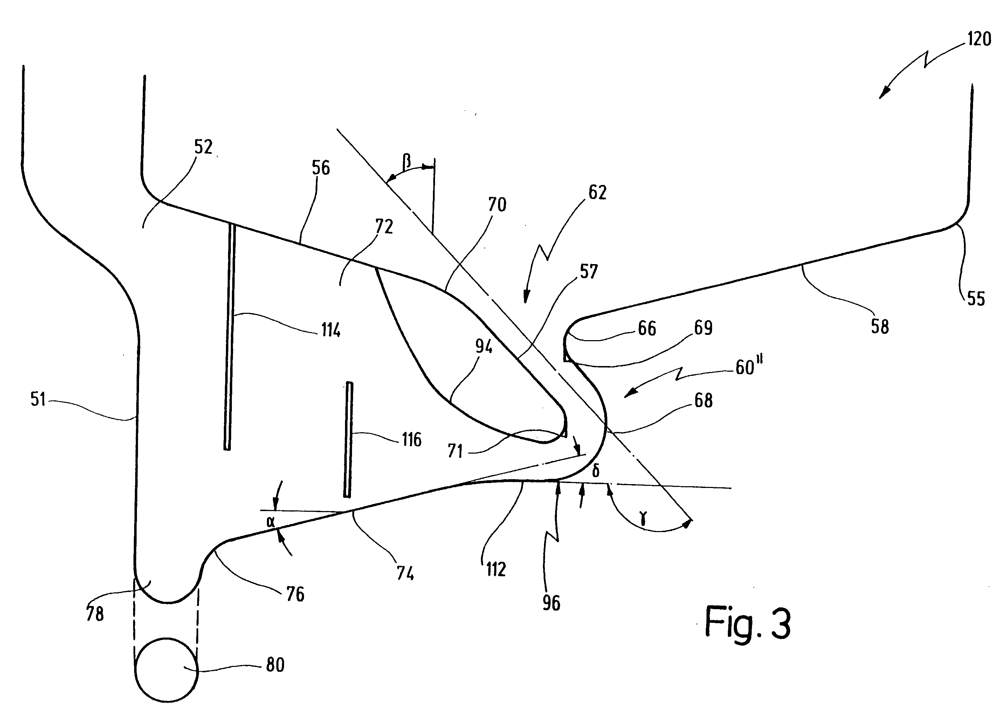

Eine weitere Abwandlung der erfindungsgemäßen Spritzkabine ist in dem Bereich des Naßabscheiders in Fig. 3 dargestellt und insgesamt mit der Ziffer 120 bezeichnet. Der Naßabscheider, der mit der Ziffer 60'' bezeichnet ist, entspricht im wesentlichen der Ausführung gemäß Fig. 2, wobei lediglich die obere Begrenzungsfläche 94 als noch weiter in den Expansionsraum 72 bis hin an die Zuströmfläche 56 anstoßende Krümmung ausgeführt ist. Der Querschnitt des Auslaufkanals 64 vergrößert sich daher im Diffusorbereich 96 weniger schnell mit wachsendem Abstand von der Krümmung 68 als dies bei der Ausführung gemäß Fig. 2 der Fall ist. Dadurch wird ein noch sanfterer Übergang von dem engeren Querschnitt zu den Bereichen mit größerem Querschnitt erreicht, so daß durch diese praktisch verlängerte Ausführung des Diffusors eine Geschwindigkeitsreduzierung des Flüssigkeits/Gasgemisches bei weiterer Reduzierung der Wirbelbildung erreicht wird, was mit einer entsprechenden Verringerung der Schaumbildung verbunden ist. Die Vorsprünge 69, 71 sind in Abwandlung von der Ausführung gemäß Fig. 2 als nach unten weisende Blechstreifen ausgebildet.

Zusätzlich sind im Expansionsraum 72 vertikale Abschlagbleche 114, 116 vorgesehen, durch die die Abscheidewirkung verbessert wird.

Es versteht sich, daß stattdessen auch Tropfenabscheider, Filter oder ähnliche Einrichtungen vorgesehen sein können.

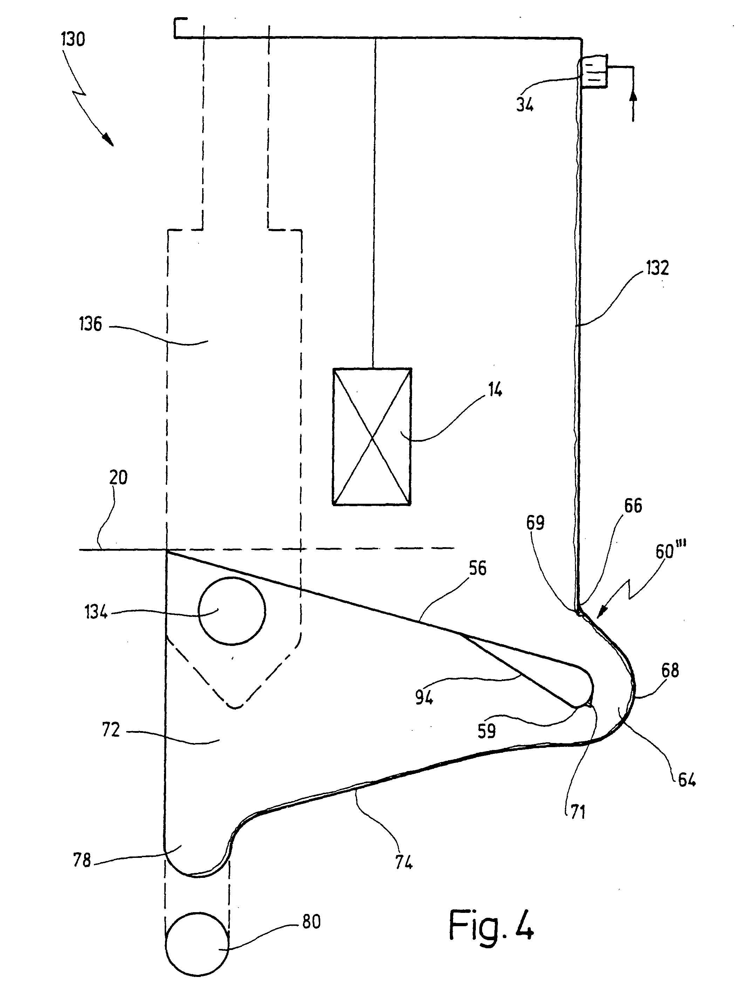

In Fig. 4 ist eine weitere Abwandlung eines erfindungsgemäßen Naßabscheiders am Beispiel eines Spritzstandes dargestellt, der insgesamt mit der Ziffer 130 bezeichnet ist.

Da bei einem Spritzstand bekanntlich die Luftführung von vorn nach hinten erfolgt, ist der Naßabscheider 60''' an die hintere beflutete Rückwand 132 des Spritzstandes 130 angeschlossen. Somit geht die aus einem Reservoir beflutete Rückwand 132 unmittelbar über die Krümmung in den Auslaufkanal 64 des Naßabscheiders 60''' über. An die Krümmung 66 schließt sich in der zuvor beschriebenen Weise wiederum die umgekehrt gerichtete Krümmung 68 an, die schließlich am Ende des Auslaufkanals 64 unmittelbar über eine sanfte Krümmung in die Bodenfläche 74 des Expansionsraums 72 übergeht.

Die gegenüberliegende Seite des Auslaufkanals 64 wird von der geneigten Zuströmfläche 56 gebildet, die am Eingang des Auslaufkanals 64 in die Krümmung 59 übergeht, die am Ende des Auslaufkanals in die obere Begrenzungsfläche 94 übergeht, die wiederum an die Unterseite der Zuströmfläche 56 dichtend angeschlossen ist.

Entsprechend der zuvor anhand von Fig. 2 beschriebenen Ausführung ist sowohl an dem unteren Ende der befluteten Rückwand 132, also an der Krümmung 66, als auch an der Krümmung 59 am Ende des Auslaufkanals 64 jeweils ein nach unten gerichteter Vorsprung 69 bzw. 71 in Form eines Winkels vorgesehen, der sich praktisch über die gesamte Breite des Auslaufkanals 64 erstreckt und an die betreffende Krümmung 66 bzw. 59 angeschweißt ist.

Wiederum wird durch den erfindungsgemäßen Naßabscheider 60''' eine außerordentlich gute Abscheidewirkung erreicht, die zusätzlich noch durch die Vorsprünge 69 bzw. 71 verstärkt wird, wobei gleichzeitig eine Schaumbildung auch bei wasserlöslichem Lack weitgehend vermieden wird.

Der Spritzstand 130 weist einen Bodenrost 20 auf, der als Standfläche für eine Bedienungsperson bestimmt ist, um Werkstücke 14 behandeln, etwa spritzlackieren zu können.

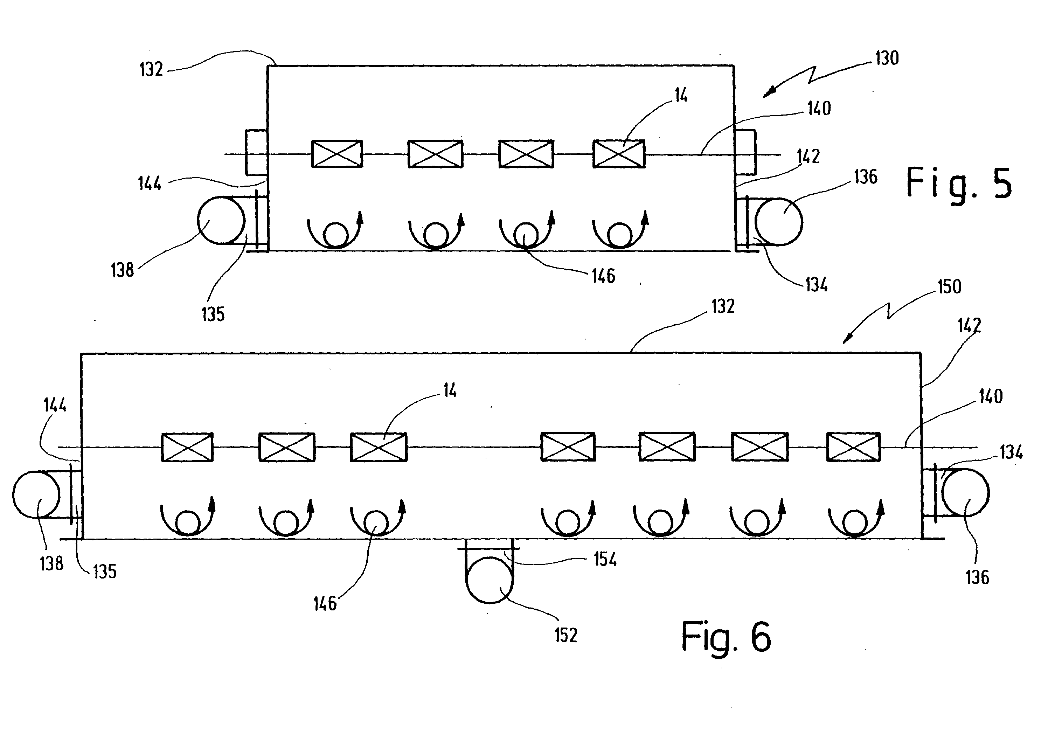

Die Abluft aus der Expansionskammer 72 wird in zwei Wäscher geführt, von denen nur einer in Fig. 4 gestrichelt dargestellt und mit der Ziffer 136 bezeichnet ist, der über einen Kanal 134 seitlich angeflanscht ist, wie dies näher aus der Darstellung gemäß Fig. 5 zu ersehen ist.

Zur Reinigung der Abluft aus dem Expansionsraum 72 ist gemäß Fig. 5 an jede Seitenwand 142, 144 jeweils ein Wäscher 136 bzw. 138 über einen Kanal 134 bzw. 135 angeflanscht.

Durch diese seitliche Anordnung der Wäscher 136 bzw. 138 wird der Arbeitsraum innerhalb des Spritzstandes 130 nicht beeinträchtigt, so daß Werkstücke 14, die etwa von einem Förderer 140 durch den Spritzstand 130 bewegt werden, ungehindert von Bedienungspersonen 146 behandelt, z.B. spritzlackiert werden können.

Eine weitere Abwandlung eines erfindungsgemäßen Spritzstandes ist in Fig. 6 dargestellt und insgesamt mit der Ziffer 150 bezeichnet. Diese Ausführung unterscheidet sich von der zuvor anhand von Fig. 5 beschriebenen Ausführung lediglich dadurch, daß der Spritzstand 150 wesentlich länger als der Spritzstand 130 gemäß Fig. 5 ist, so daß die beiden seitlich angeordneten Wäscher 136 bzw. 138 keine ausreichende Abluftbehandlung mehr gewährleisten. Zu diesem Zweck ist zusätzlich etwa in der Mitte der Längserstreckung ein weiterer Wäscher 152 an der Vorderseite des Spritzstandes 150, also gegenüber der Rückwand 132, angeordnet, der über einen quer zur Bewegungsrichtung des Förderers 140 verlaufenden Kanal 154 an den Expansionsraum 72 angeflanscht ist.

Der Arbeitsbereich des Spritzstandes 150 wird durch diesen Wäscher 152 zwar lokal eingeschränkt, jedoch lassen sich auf diese Weise beliebig lange Spritzstände aufbauen.

Es versteht sich, daß dann, wenn im Vorstehenden von Krümmungen die Rede ist, bei Blechen darunter auch eine an vielen Segmenten feingekantete Ausführung zu verstehen ist, da sich Bleche großflächig schlecht biegen lassen.

Der Naßabscheider ist in der Regel aus Blech, vorzugsweise aus Edelstahlblech hergestellt, jedoch ist auch eine Ausführung aus Kunststoff oder Stahlblech mit Antihaftbeschichtung denkbar.

Mit Hilfe des erfindungsgemäßen Naßabscheiders wird auch ein Farbwechsel erheblich erleichtert. Dies wird zum einen durch die zusätzlich angeordneten Waschdüsen bzw. durch die manuelle Reinigungsmöglichkeit durch die Zugangstür gemäß Fig. 1 ermöglicht, zum anderen durch die Tatsache, daß die obere Begrenzungsfläche, in der sich die Krümmung des Auslaufkanals fortsetzt, bis hin zur Zuströmfläche geführt und an diese dichtend angeschlossen ist, so daß ein Absetzen von Flüssigkeit dahinter vermieden wird.

## Patentansprüche

1. Naßabscheider für eine Spritzkabine oder einen Spritzstand, mit zumindest einseitig geneigten Zuströmflächen (56, 58, 132), die zu einem Bodenauslauf (62) hin konvergieren und in einen gegenüber der Vertikalen geneigten, gekrümmten Auslaufkanal (64) münden, der in eine Expansionskammer (72) mündet, wobei zumindest eine der Zuströmflächen (58, 132) über eine Krümmung (66) in den Auslaufkanal (64) übergeht, die von einer entgegengesetzt gerichteten Krümmung (68) des Auslaufkanals (64) gefolgt ist, **dadurch gekennzeichnet, daß** der Auslaufkanal (64) in eine geneigte Bodenfläche (74) des Expansionsraums (72) übergeht, dessen Neigung (α) gegenüber der Horizontalen mindestens 10° beträgt.

2. Naßabscheider nach Anspruch 1, **dadurch gekennzeichnet, daß** die Neigung (α) der Bodenfläche (74) zwischen 10° und 30° beträgt.

3. Naßabscheider nach Anspruch 2, **dadurch gekennzeichnet, daß** die Neigung (α) der Bodenfläche (74) zwischen etwa 15° und 20° beträgt.

4. Naßabscheider nach einem oder mehreren der vorhergehenden Ansprüche, **dadurch gekennzeichnet, daß** die entgegengesetzt gerichtete Krümmung (68) des Auslaufkanals (64) stärker als 90° gekrümmt ist.

5. Naßabscheider nach einem oder mehreren der vorhergehenden Ansprüche, **dadurch gekennzeichnet, daß** sich an die entgegengesetzt gerichtete Krümmung (68) des Auslaufkanals (64) eine zweite entgegengesetzt gerichtete Krümmung (112) anschließt, die in die Bodenfläche (74) des Expansionsraums (72) übergeht.

6. Naßabscheider nach einem oder mehreren der vorhergehenden Ansprüche, **dadurch gekennzeichnet, daß** die obere Begrenzungsfläche (94) des Auslaufkanals (64) in Richtung zur darüberliegenden Zuströmfläche (56) hin verlängert ist.

7. Naßabscheider nach Anspruch 6, **dadurch gekennzeichnet, daß** die obere Begrenzungsfläche (94) des Auslaufkanals (64) an die darüberliegende Zuströmfläche (56) dichtend angeschlossen ist.

8. Naßabscheider nach einem oder mehreren der vorhergehenden Ansprüche, **dadurch gekennzeichnet, daß** die Bodenfläche (74) des Expansionsraums (72) über eine Krümmung (76) von weniger als 90° in eine Auslaufrinne (78) übergeht.

9. Naßabscheider nach Anspruch 8, **dadurch gekennzeichnet, daß** die Auslaufrinne (78) ein quer zur Strömungsrichtung der Flüssigkeit auf der Bodenfläche (74) gerichtetes Gefälle aufweist.

10. Naßabscheider nach einem oder mehreren der vorhergehenden Ansprüche, **dadurch gekennzeichnet, daß** die Neigung der Zuströmflächen (56, 58, 132) und deren Übergänge zum Auslaufkanal (64), sowie die Form des Auslaufkanals (64) derart aufeinander abgestimmt sind, daß die Strömungsgeschwindigkeit im Auslaufkanal (64) höchstens 15 Meter pro Sekunde beträgt.

11. Naßabscheider nach Anspruch 10, **dadurch gekennzeichnet, daß** die Strömungsgeschwindigkeit im Auslaufkanal (64) etwa zwischen 6 und 10 Meter pro Sekunde beträgt.

12. Naßabscheider nach einem oder mehreren der vorhergehenden Ansprüche, **dadurch gekennzeichnet, daß** am Ende des Auslaufkanals (64) Spritz- oder Nebeldüsen (92) vorgesehen sind, um das aus dem Auslaufkanal (64) austretende Flüssigkeits/Gasgemisch von oben zu besprühen.

13. Naßabscheider nach einem oder mehreren der vorhergehenden Ansprüche, **dadurch gekennzeichnet, daß** innerhalb des Expansionsraums (72) Abschlagbleche (114, 116), Tropfenabscheider oder Filter vorgesehen sind.

14. Naßabscheider nach einem oder mehreren der vorhergehenden Ansprüche, **dadurch gekennzeichnet, daß** innerhalb des Expansionsraums (72) Waschdüsen (88, 90) zur Reinigung der Begrenzungsflächen vorgesehen sind.

15. Naßabscheider nach einem oder mehreren der vorhergehenden Ansprüche, **dadurch gekennzeichnet, daß** innerhalb des Expansionsraums (72) eine Zugangstür (86) vorgesehen ist.

16. Naßabscheider nach einem oder mehreren der vorhergehenden Ansprüche, **dadurch gekennzeichnet, daß** die Zuströmflächen (56, 58) mit den Wandflächen (16, 18) der Spritzkabine oder des Spritzstandes über Krümmungen (56) verbunden sind, in deren Bereich Waschdüsen (22, 24) angeordnet sind.

17. Naßabscheider nach einem oder mehreren der vorhergehenden Ansprüche, **dadurch gekennzeichnet, daß** wenigstens an der zumindest einen Krümmung (66) der Zuströmfläche (58, 132) am Beginn des Auslaufkanals (64) oder an der oberen Begrenzungsfläche (94) am Ende des Auslaufkanals (64) ein nach unten weisender Vorsprung (69, 71) als Tropfnase vorgesehen ist.

18. Naßabscheider nach Anspruch 17, **dadurch gekennzeichnet, daß** der Vorsprung (69, 71) als Winkel ausgeführt ist, der dichtend an die Krümmung (66) der Zuströmfläche (58, 132) oder an die obere Begrenzungsfläche (94) am Ende des Auslaufkanals (64) angeschlossen ist.

19. Spritzkabine **gekennzeichnet durch** einen Naßabscheider (60, 60', 60'') nach einem oder mehreren der vorhergehenden Ansprüche.

20. Spritzstand **gekennzeichnet durch** einen Naßabscheider (60''') nach einem oder mehreren der Ansprüche 1-18.

21. Spritzstand nach Anspruch 20, **dadurch gekennzeichnet, daß** an mindestens einer Seitenwand (142, 144) ein Wäscher (136, 138) angekoppelt ist, der mit der Expansionskammer (72) verbunden ist.

22. Spritzstand nach Anspruch 20 oder 21, **dadurch gekennzeichnet, daß** mindestens ein Wäscher (152) im vorderen, der befluteten Rückwand (132) gegenüberliegenden Bereich des Spritzstandes (150) vorgesehen ist.

## Claims

1. Wet collector for a spray booth or a spray stand with streaming surfaces (56, 58, 132) inclined at least on one side that converge to a floor outflow (62) and terminate in a curved outflow channel (64) inclined with respect to the vertical, said channel terminating in an expansion chamber (72), wherein at least one of the streaming surfaces (56, 58, 132) transforms via a curvature section (66) into the outflow channel (64), the said curvature being followed by an oppositely directed curvature section (68) of the outflow channel (64), **characterised in that** the said outflow channel (64) transforms into an inclined floor surface (74) of the expansion space (72), whose inclination (α) relative to the horizontal is at least 10°.

2. Wet collector according to claim 1, **characterised in that** the inclination (α) of the floor surface (74) is between 10° and 30°.

3. Wet collector according to claim 2, **characterised in that** the inclination (α) of the floor surface (74) is between about 15° and 20°.

4. Wet collector according to one or more of the preceding claims, **characterised in that** the oppositely directed curvature (68) of the outflow channel (64) is greater than 90°.

5. Wet collector according to one or more of the preceding claims, **characterised in that** the oppositely directed curvature (68) of the outflow channel (64) joins a second, oppositely directed curvature (112) that transforms into the floor surface (74) of the expansion space (72).

6. Wet collector according to one or more of the preceding claims, **characterised in that** the upper boundary surface (94) of the outflow channel (64) is extended in the direction of the overlying streaming surface (56).

7. Wet collector according to claim 6, **characterised in that** the upper boundary surface (94) of the outflow channel (64) is connected in a liquid-tight manner to the overlying streaming surface (56).

8. Wet collector according to one or more of the preceding claims, **characterised in that** the floor surface (74) of the expansion space (72) transforms via a curvature (76) of less than 90° into an outflow groove (78).

9. Wet collector according to claim 8, **characterised in that** the outflow groove (78) has a gradient aligned transverse to the flow direction of the liquid at the floor surface (74).

10. Wet collector according to one or more of the preceding claims, **characterised in that** the inclination of the streaming surfaces (56, 58, 132) and their transitions to the outflow channel (64) as well as the shape of the outflow channel (64) are matched to one another in such a way that the flow velocity in the outflow channel (64) is at most 15 metres per second.

11. Wet collector according to claim 10, **characterised in that** the flow velocity in the outflow channel (64) is between about 6 and 10 metres per second.

12. Wet collector according to one or more of the preceding claims, **characterised in that** spray or mist nozzles (92) are provided at the end of the outflow channel (64) in order to spray from above the liquid/gas mixture exiting from the outflow channel (64).

13. Wet collector according to one or more of the preceding claims, **characterised in that** metal baffle plates (114, 116), droplet collectors or filters are provided within the expansion space (72).

14. Wet collector according to one or more of the preceding claims, **characterised in that** wash jets (88, 90) for cleaning the boundary surfaces are provided inside the expansion space (72).

15. Wet collector according to one or more of the preceding claims, **characterised in that** an access door (86) is provided inside the expansion space (72).

16. Wet collector according to one or more of the preceding claims, **characterised in that** the streaming surfaces (56, 58) are joined to the wall surfaces (16, 18) of the spray cabinet or of the spray stand via curvatures (56), in whose region wash jets (22, 24) are arranged.

17. Wet collector according to one or more of the preceding claims, **characterised in that** at least on the at least one curvature section (66) of the streaming surface (58, 132) there is provided at the beginning of the outflow channel (64) or at the upper boundary surface (94) at the end of the outflow channel (64) a downwardly pointing projection (69, 71) acting as a drip spout.

18. Wet collector according to claim 17, **characterised in that** the projection (69, 71) is formed as an angle piece that is joined in a liquid-tight manner to the curvature section (66) of the streaming surface (58, 132) or to the upper boundary surface (94) at the end of the outflow channel (64).

19. Spray booth **characterised by** a wet collector (60, 60', 60'') according to one or more of the preceding claims.

20. Spray stand **characterised by** a wet collector (60''') according to one or more of claims 1 to 18.

21. Spray stand according to claim 20, **characterised in that** a washer (136, 138) that is connected to the expansion chamber (72) is coupled to at least one side wall (142, 144).

22. Spray stand according to claim 20 or 21, **characterised in that** at least one washer (152) is provided in the front region of the spray stand (150) opposite the rear wall (132) over which the liquid flows.

## Revendications

1. Séparateur humide pour une cabine de pulvérisation ou un stand de pulvérisation, présentant des surfaces d'arrivée (56, 58, 132), inclinées au moins d'un côté, qui convergent vers une évacuation de fond (62) et qui débouchent dans un canal d'évacuation (64) courbé, incliné par rapport à la verticale, lequel débouche dans une chambre d'expansion (72), l'une au moins des surfaces d'arrivée (58, 132) se prolongeant, dans le canal d'évacuation (64), par une courbure (66) qui est suivie d'une courbure (68) dirigée en sens opposé du canal d'évacuation (64), **caractérisé en ce que** le canal d'évacuation (64) se prolonge dans une surface de fond (74) inclinée de la chambre d'expansion (72), dont l'inclinaison (α) est d'au moins 10° par rapport à l'horizontale.

2. Séparateur humide selon la revendication 1, **caractérisé en ce que** l'inclinaison (α) de la surface de fond (74) est comprise entre 10° et 30°.

3. Séparateur humide selon la revendication 2, **caractérisé en ce que** l'inclinaison (α) de la surface de fond (74) est comprise entre environ 15° et 20°.

4. Séparateur humide selon une ou plusieurs des revendications précédentes, **caractérisé en ce que** la courbure (68) dirigée en sens opposé du canal d'évacuation (64) est supérieure à 90°.

5. Séparation humide selon une ou plusieurs des revendications précédentes, **caractérisé en ce qu'**à la courbure (68) dirigée en sens opposé du canal d'évacuation (64) fait suite une deuxième courbure (112) dirigée en sens opposé qui se prolonge dans la surface de fond (74) de la chambre d'expansion (72).

6. Séparateur humide selon une ou plusieurs des revendications précédentes, **caractérisé en ce que** la surface de délimitation supérieure (94) du canal d'évacuation (64) est prolongée en direction de la surface d'arrivée (56) située au-dessus.

7. Séparateur humide selon la revendication 6, **caractérisé en ce que** la surface de délimitation supérieure (94) du canal d'évacuation (64) est raccordée de manière étanche à la surface d'arrivée (56) située au-dessus.

8. Séparateur humide selon une ou plusieurs des revendications précédentes, **caractérisé en ce que** la surface de fond (74) de la chambre d'expansion (72) se prolonge, par une courbure (76) inférieure à 90°, dans une rigole d'évacuation (78).

9. Séparateur humide selon la revendication 8, **caractérisé en ce que** la rigole d'évacuation (78) présente une pente dirigée transversalement à la direction d'écoulement du liquide sur la surface de fond (74).

10. Séparateur humide selon une ou plusieurs des revendications précédentes, **caractérisé en ce que** l'inclinaison des surfaces d'arrivée (56, 58, 132) et leurs transitions avec le canal d'évacuation (74), ainsi que la forme du canal d'évacuation (74) sont adaptées les unes aux autres de manière que la vitesse d'écoulement dans le canal d'évacuation (64) soit au plus égale à 15 mètres par seconde.

11. Séparateur humide selon la revendication 10, **caractérisé en ce que** la vitesse d'écoulement dans le canal d'évacuation (64) est comprise entre environ 6 et 10 mètres par seconde.

12. Séparateur humide selon une ou plusieurs des revendications précédentes, **caractérisé en ce qu'**à l'extrémité du canal d'évacuation (64) sont prévues des buses de pulvérisation ou de nébulisation (92) afin de pulvériser depuis le haut le mélange liquide/gaz qui sort du canal d'évacuation (64).

13. Séparateur humide selon une ou plusieurs des revendications précédentes, **caractérisé en ce qu'**à l'intérieur de la chambre d'expansion (72) sont prévues des tôles de précipitation (114, 116), des séparateurs de goutte ou des filtres.

14. Séparateur humide selon une ou plusieurs des revendications précédentes, **caractérisé en ce qu'**à l'intérieur de la chambre d'expansion (72) sont prévues des buses de lavage (88, 90) pour nettoyer les surfaces de délimitation.

15. Séparateur humide selon une ou plusieurs des revendications précédentes, **caractérisé en ce qu'**à l'intérieur de la chambre d'expansion (72) est prévue une porte d'accès (86).

16. Séparateur humide selon une ou plusieurs des revendications précédentes, **caractérisé en ce que** les surfaces d'arrivée (57, 58) sont reliées aux surfaces de paroi (16, 18) de la cabine de pulvérisation ou du poste de pulvérisation, par des courbures (56) dans la zone desquelles sont disposées des buses de lavage (22, 24).

17. Séparateur humide selon une ou plusieurs des revendications précédentes, **caractérisé en ce qu'**au moins sur la ou les courbures (66) de la surface d'arrivée (58, 132) il est prévu, au début du canal d'évacuation (64) ou sur la surface de délimitation supérieure (94), à l'extrémité du canal d'évacuation (64), une saillie (69, 71) dirigée vers le bas servant de bec égouttoir.

18. Séparateur humide selon la revendication 17, **caractérisé en ce que** le saillie (69, 71) est réalisée sous la forme d'une cornière qui est raccordée de manière étanche à la courbure (66) de la surface d'arrivée (58, 132) ou à la surface de délimitation supérieure (94) à l'extrémité du canal d'évacuation (64).

19. Cabine de pulvérisation **caractérisée par** un séparateur humide (60, 60', 60") selon une ou plusieurs des revendications précédentes.

20. Poste de pulvérisation **caractérisé par** un séparateur humide (60''') selon une ou plusieurs des revendications 1 à 18.

21. Stand de pulvérisation selon la revendication 20, **caractérisé en ce que** sur au moins une paroi latérale (142, 144) est accouplé un laveur (136, 138) qui est relié à la chambre d'expansion (72).

22. Stand de pulvérisation selon la revendication 20 ou 21, **caractérisé en ce qu'**il est prévu au moins un laveur (152) dans la zone avant du poste de pulvérisation (150), opposée à la paroi arrière (132) lavée.
